# EUROPEAN PATENT SPECIFICATION

(11) **EP 0 983 658 B1**
(45) Date of publication and mention of the grant of the patent: **28.03.2007**
(21) Application number: 98924349.8
(22) Date of filing: 03.06.1998
(51) Int. Cl.: H04L 7/00, H04L 12/28

(54) **METHOD FOR PROVIDING TIME SYNCHRONIZATION IN A NETWORK**
VERFAHREN ZUR VERFÜGUNGSSTELLUNG VON ZEITSSYNCHRONISIERUNG IN EINEM NETZWERK
PROCEDE PERMETTANT UNE SYNCHRONISATION TEMPORELLE DANS UN RESEAU

(30) Priority: 03.06.1997 NO 972519
(43) Date of publication of application: 08.03.2000
(73) Proprietor: ABB RESEARCH LTD., 8050 Zürich (CH)
(72) Inventor: MARIANI, Maurizio, N-1315 Nes ya (NO); VEFLING, Harald, N-1392 Vettre (NO); HÄMYNEN, Kimmo, FIN-02210 Espoo (FI); KOZLOWSKI, Wojciech, PL-80-172 Gdansk (PL)
(74) Representative: Äkräs, Tapio Juhani
(86) International application number: PCT/FI1998/000481
(87) International publication number: WO 1998/056135

(56) References cited:
- EP-A- 0 697 774
- WO-A1-87/04306
- WO-A1-93/04544
- WO-A1-93/14570
- WO-A1-95/02294
- US-A- 5 535 217
- US-A- 5 602 922

## Description

### Field of the invention

The present invention relates to a method for providing time synchronization in a network, especially in a Local Area Network (LAN), in which the network a (selected) node comprises a Master Time Distributor designed for broadcasting clock information on demand.

### Background of the invention

A common problem in Local Area Networks (LAN) is the concept of Absolute Time. Even if one node is designated a role of Master Time Distributor and responsible for broadcasting clock information on demand, the medium access mechanism of LAN introduces an unpredictable delay to the transfer of time synchronization message. This delay can easily surpass the required precision of the Absolute Time, rendering the whole concept meaningless. In addition. the duration of the time synchronization message and the message handling delays in the receiving nodes introduce further uncertainties.

### Prior art

From US 5 408 506 (Mincher et al.) there is a distributed time synchronization system and method, wherein some nodes will have their frequency amended in relation to a virtual master clock value.

US 5 440 556 (Edem et al.) relates to a method wherein two circuits on each side of a network line are synchronized to the same reference clock by sending each circuit a 125µs pulse.

US 5 602 922 (Danneels) relates to a system for synchronizing data transmitted from a server to a client, by initializing the clock when the first packet has been received and furthermore comparing the clock times with the packet time. This system may be relevant in connection with video, where time distances are relevant.

US 5 544 324 (Edem et al.) relates to a network for transmitting isochronous data by using a frame structure having a variable number of time slots to compensate for timing variants between reference clocks and data rate. An example of an isochronous data sync is a video monitor which can receive a continuous stream of video data for display, and this prior art seeks to transfer such isochronous data in a more appropriate manner.

EP 0 697 774 discloses a method for estimating the clock offset between the clocks of a pair of communications stations.

WO 87/04306 (Ketzler/ETA Systems) relates to an electronic clock control system for digital data computers. The system comprises of a master oscillator distributing clock signals to a number of circuit cards for regulating the time delay to each circuit card.

WO 93/04544 (Wray/Motorola) relates to a method for adjusting a synchronization signal with a received data signal by using an error signal which defines the difference between the two signals.

WO 93/14570 (Bergström/Asea Brown Boveri) relates to a method and device, used for tuning an internal generated clock pulse signal by using master and slave units in a FLL circuit.

### Summary of the invention

The object of the present intention is to introduce a method of time distribution that will circumvent the problem of unpredictable delays, for thereby enabling a very accurate time synchronization.

This object is based on a defined network event called a "tick". The requirement for such a tick is only that it can be transmitted on a network, and is unique and easily recognizable. Some possible tick candidates are:
- One or more legal network addresses in the packet
- One or more legal network group addresses in the packet
- A legal packet with enforced code violation in the predefined part
- A predefined sequence of bits ending in a code violation
- A pulse of predefined length

The object of the invention is achieved with a method, a network, and a time synchronization slave node as defined in the attached independent claims.

The node which sends (broadcasts) the tick may be the master node or any one of the slave nodes. There are several advantages gained by the use of a slave node for sending the tick instead of the master node. Firstly, the processing load required at the master node will be reduced since the master node with the highest processing load and with no need of precise time synchronization does not have to process all ticks and is able to dedicate its processing power to primary functions. Receiving a tick from a slave node, the master node will send the time message containing the arrival time of the tick at the master node and being addressed to a all slaves, to a group of slaves, or to a specific slave node requesting the synchronization.

Secondly, a slave node which has lost the synchronization is able to restore the synchronization more rapidly. Let us assume that a slave is reset and then booted up. If it is the master node only which sends the tick the delay between the booting up the slave node and receiving the tick and the associated time message and thereby the synchronization of the slave node may be relatively long. When the tick is send by the slave node after the reset, eg. In the end of the booting procedure, the synchronization is achieved as soon as possible, without need of waiting for master synchronization cycle.

Thirdly, the slave nodes may have different requirements for time accuracy and thereby different cycle times of time synchronization. In case it is the master node which sends the ticks, the ticks will be sent to all the slave nodes with the cycle time of the node(s) having the most strict timing requirements. This results in unnecessary loading of the master node particularly and also the slave nodes with a less strict timing requirements. When each node, or one node in a group of slave nodes having similar timing requirements, is able to send the tick when required, i.e. at regular intervals or on demand, the loading will be optimized. By providing two or more different ticks it is possible to arrange the slave nodes into two or more groups having different timing requirements or loading situations, so that slave nodes in one group is not able to recognize a tick send by a slave node in another group. As a consequence, heavily loaded slave nodes having less strict timing requirements will not recognize a frequently sent tick of another group and will not waste time and processing capacity for unnecessary synchronization events.

In one embodiment of the invention one slave node in a group of slave nodes is nominated as a time submaster node which synchronizes itself cyclically with the master node by means of the method according to the invention. The other slave node(s) in the group is (are) synchronized very accurately with the submaster node by means of the method according to the invention. This arrangement will still further decrease the loading of the master node.

Further features and advantages of the present solution will appear from the following description of suggested embodiments, as well as from the appending patent claims.

### Brief disclosure of the drawings

The invention will now be further described, with reference to the enclosed drawing.
Figure 1 is a diagram illustrating the clock distribution sequence using conventional methods.
Figure 2 is a diagram illustrating the time synchronization using the methods according to the present invention.
Figure 3 is a block diagram illustrating an embodiment wherein the present invention can find its application,
Figure 4 is a signalling diagram illustrating the time synchronization wherein a slave node sends the tick.

### Detailed description of the invention

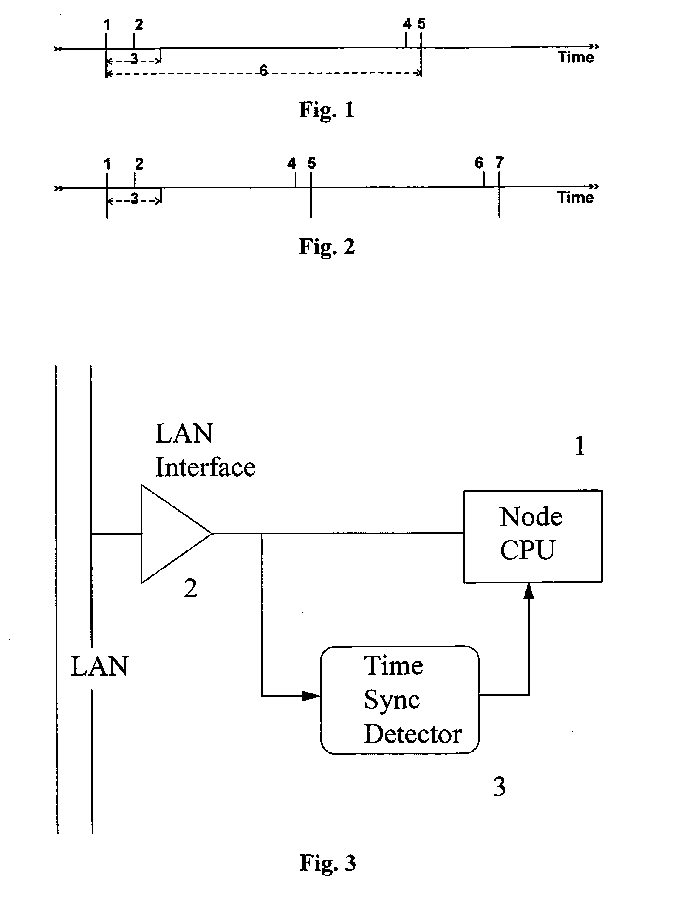

Firstly, reference is made to Fig. 1 which is a diagram illustrating the clock information distribution sequence using conventional methods.

In Fig. 1 the numeral references herein mean:
1 Time Sync Master Software reads master clock, prepares time message
2 Time Sync Master Software puts the time message in transmit queue
3 Maximum allowable difference between local clocks
2-4 Time Sync Master waits for transmit permission
4 Time Sync Master transmits the time message and Time Sync Slave receives the time message
5 Time Sync Slave Software finished processing the received time message
6 Difference between Time Sync Slave clock and Time Sync Master clock.

The problem with this prior art solution lies in the time interval from 2 to 4 - the period when a clock message is ready for transmission but the node has not yet gained access to the network. The length of this time interval is very hard to predict, as it depends on the bus access mechanism and the current state of the network.

Next reference is made to Fig. 2 which is a diagram illustrating the time synchronization using the methods according to the present invention

In Fig. 2 the numeral references therein mean:
1 Time Tick Master Software puts a tick in the transmit queue
2-4 Tick is queued, waiting for transmission
4 Tick is on the network medium and all Time Tick Slaves receive the tick
5 Time Tick Slave Software notes the local tick arrival time (Tₗₜ), Time Sync Master Software prepares time message containing the master clock tick arrival time (Tₘₜ) and puts it in the transmit queue
5-6 Message containing the absolute time (master clock tick arrival time) is queued in the Time Sync Master Node, waiting for transmission
6 Time Sync Master transmits the master clock time message on the network medium
7 Each Time Sync Slave receives the time massage (the receiving instant can be different from node to node) and updates its local time (T₁) by the time difference between the recorded local tick arrival time and the received master clock time message (T₁ = T₁+ Tₘₜ - Tₗₜ).

If we now look at Fig. 2, the situation is quite different when compared with Fig. 1. The tick does not contain any clock information. It is intended for all nodes that need absolute time update. The only important thing about the tick is that it should arrive at all such nodes with the same delay every time. When it arrives, each node stores the local time value on its arrival. The Time Sync Master node then prepares a master clock time message containing the time when the tick arrived and transmits it on the network. When this message arrives, all nodes can check the master clock time against their own stored tick arrival time and update their local clock by the difference between the local arrival time and the master clock time.

### Basic principle

The basic principle of the Very Accurate Time Synchronization system is that the time distribution procedure is changed from one-step to two-step.
- A synchronization event (tick) is defined on the LAN. The only restriction on such a tick is only that it is unique and easily recognizable. The tick may also called a synchronization message. Some possible tick candidates are:

- One or more legal network addresses
- One or more legal network group addresses
- A legal packet with enforced code violation in the predefined part
- A predefined sequence of bits ending in a code violation
- A pulse of predefined length
- A synchronization event is detected in a specified position in the tick.

The two-step time distribution procedure is as follows:
1. One node of the LAN is responsible for generating synchronization events at regular intervals or on demand. The detection of a synchronization event by LAN nodes is a time-critical element of the procedure
2. One node of the LAN is assigned the role of the Master Time Distributor. Whenever this node detects a synchronization event on the LAN, it records the time when the event was detected and broadcasts a message containing the recorded time to all nodes that require time synchronization. The transfer of this message is not time-critical.

This approach eliminates the impact of the LAN medium access delay, but one still has to cope with the delay of processing synchronization events. This can be solved if every node that requires time synchronization fulfills some basic requirements.

### Requirements on LAN nodes

Fig. 3 shows a block diagram of a Local Area Network node. Such a node must satisfy four requirements:
1. A raw data stream from the LAN interface 2 must be available.
2. A Time Synchronization Event Detector 3 that can detect a specified synchronization event in the raw data stream, must be added.
3. The node 1 must be able to maintain local time between time synchronization messages.
4. The node CPU or the local clock handling hardware must be able to react on the signal from Synchronization Event Detector 3.

### Very accurate time synchronization procedire

If all nodes requiring time synchronization fulfill the requirements presented in the last paragraph, the procedure of very accurate time synchronization is as follows:
1. When a synchronization event is detected, the Synchronization Event Detector 3 notifies the CPU or the local clock handling hardware.
2. The local time for that event is recorded.
3. If the node is the time synchronization master, the recorded time is transmitted in a message to other nodes that require time synchronization.
4. All other nodes wait for the time message from the Master node. When this message arrives, the local clock is adjusted of a difference between the received time and the recorded time of the synchronization event occurrence.

Using this procedure the time synchronization uncertainty is reduced to four very small components:
- The transmission delay on the network medium. For almost all Local Area Networks this delay is below 10µs.
- The resolution of the local clock hardware. This is usually well below 1 µs.
- The difference in the detection of synchronization event. This can be equal to the resolution of the local clock or better.
- The difference in the reaction time on the synchronization event detection. Even if the reaction time can be at the level of 40µs or more, the difference in the reaction time will usually be below 1 µs. In this way the Very Accurate Time Synchronization procedure approaches the theoretical limit (light speed) of time distribution over the LAN medium.

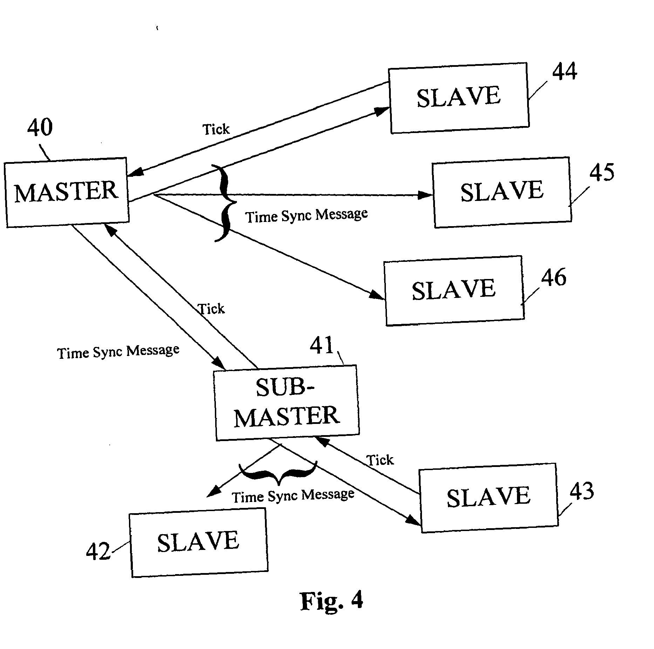

The node which sends (broadcasts) the tick may be the master node or any one of the slave nodes. Fig. 4 illustrates a signalling diagram, in which slave 44 sends a tick on the network (not shown), i.e. to a master node 40 and other slave nodes 45 and 46. All slave nodes 44-46 will receive the tick and register a local arrival time of the tick. Receiving a tick from the slave node 44, the master node 40 will send the time message containing the arrival time of the tick at the master node 40 to the slave nodes 44-46. The slave nodes 44-46 check the tick arrival time in the message against the node's own stored tick arrival time and update the node's local clock by the difference between the local arrival time and the arrival time at the master node 40. In one embodiment of the invention one slave node in a group of slave nodes is nominated as a time submaster node 41 which synchronizes itself cyclically with the master node 40 by means of the method according to the invention, as shown in Fig 4. In other words submaster node 41 sends a tick on the network. Both master node 40 and the submaster node 41 will receive the tick and register a local arrival time of the tick. Receiving a tick from the submaster node 41, the master node 40 will send the time message containing the arrival time of the tick at the master node 40 to the submaster node 41. The submaster node 41 checks the the tick arrival time in the message against the node's own stored tick arrival time and updates the node's local clock by the difference between the local arrival time and the arrival time at the master node 40. The other slave nodes 42 and 43 in the group are synchronized very accurately with the submaster node 41 by means of the method according to the invention. More particularly, in the example shown, slave 43 sends a tick on a network to a submaster node 41 and the other slave node 42. Both slave nodes 42 and 43 will receive the tick and register a local arrival time of the tick. Receiving a tick from the slave node 43, the submaster node 41 will send the time message containing the arrival time of the tick at the submaster node 41 to the slave nodes 42-43. The slave nodes 42-43 check the tick arrival time in the message against the node's own stored tick arrival time and update the node's local clock by the difference between the local arrival time and the arrival time at the submaster node 41. This arrangement will still further decrease the loading of the master node due to the decreased number of ticks to be processed.

When the slave initiated synchronization according to the invention is employed, a slave node which has lost the synchronization is able to restore the synchronization more rapidly. Let us assume that a slave 44 is reset and then booted up in Fig. 4. If it is the master node 40 only which sends the tick, the delay between the booting up the slave node 44 and receiving the tick and the associated time message from the master node 40 at slave node 44 and thereby the synchronization of the slave node 44 may be relatively long. When the tick is send by the slave node 44 immeadiately after the reset, eg. in the end of the booting procedure, the synchronization is achieved as soon as possible, without need of waiting for the cyclical master synchronization cycle.

The drawings and the description thereof are only intended to illustrate the idea of the invention. The invention may vary in details within the scope of the attached claims.

## Claims

1. Method for providing time synchronization in a network including network nodes (40,41,44,45,46), said method comprising
- defining one of said nodes as a time synchronization master node (40),
- defining other ones of said nodes as time synchronization slave nodes (41,44,45,46),
**characterized by**
- sending a synchronization tick on the network from at least one of said time synchronization slave nodes (41,44,45,46) at regular intervals or on demand,
- receiving the tick at all of said nodes (40,41,44,45,46),
- at least at each of said time synchronization slave node (41,44,45,46) requiring synchronization, recording the local tick arrival time,
- said time synchronization master node (40), upon detection of such a tick, sending a message containing the tick arrival time at said time synchronization master node, to any of said time synchronization slave node (41,44,45,46) requiring time synchronization,
- at least at each of said time synchronization slave node (41,44,45,46) requiring synchronization, receiving said message containing the tick arrival time at said time synchronization master node (40),
- at least at each of said time synchronization slave node (41,44,45,46) requiring synchronization, comparing the tick arrival time contained in the message with the recorded local tick arrival time of the respective slave node and updating a local clock by the difference between the local tick arrival time and the tick arrival time at the master node (40).

2. Method as claimed in claim 1, **characterized in that** said tick is defined at the moment when the last bit of a particular set of network addresses is detected or when a specified bit sequence in a packet is detected or when a specified signal is detected on .the Local Area Network LAN medium.

3. Method as claimed in claim 1 or 2, **characterized in that** a local node (41,44,45,46) is adapted to receive a raw data stream from said Local Area Network LAN through an appropriate interface.

4. Method as claimed in any of the preceding claims, **characterized in that** said local node (41,44,45,46) is adapted to communicate with a Synchronization Time Detector for detecting a tick in the raw data stream received from the network interface.

5. Method as claimed in any of the preceding claims, **characterized in that** said local node is adapted to keep time between synchronization messages.

6. Method as claimed in any of the preceding claims, **characterized in that** any node is adapted to receive a Time Distribution Message plus the amount of time that has passed since the tick arrived.

7. A method as claimed in any of the preceding claims, **characterized in that** any one of the slave nodes (41,44,45,46) being arranged to send the tick after a reset of the respective slave node.

8. A method as claimed in any of the preceding claims, **characterized in that** the slave nodes (41,44,45,46) have different requirements for time accuracy, each slave node or one of a group of slave nodes sends a tick to the time synchronization master node (40) when needed.

9. A method as claimed in any of the preceding claims, **characterized in that** one slave node (41) is a time submaster node which synchronizes itself with the master node, and that at least one further slave node (42,43) is synchronized with the time submaster node (41).

10. A method as claimed in any of the preceding claims, **characterized in that** the synchronization tick is a predetermined network event.

11. A network having a a time synchronization arrangement in which in one node in the network is a time synchronization master node (40), the remaining nodes (41,44,45,46) being time synchronization slave nodes synchronized with the master node (40), **characterized in that**
at least one slave node (41,44,45,46) in the network is arranged to send a synchronization tick on the network at regular intervals or on demand,
the time synchronization master node (40) being arranged to, upon detection of such a tick from said at least one slave node (41,44,45,46), send a message containing the tick arrival time at the master node (40) to any node (41,44,45,46) requiring time synchronization,
any slave node (41,44,45,46) requiring time synchronization is arranged to the receive the tick and the message, and to check the tick arrival time in the message against the slave node's (41,44,45,46) own stored tick arrival time and update the slave node's local (41,44,45,46) clock by the difference between the local arrival time and the arrival time at the master node (40).

12. A network as claimed in claim 11, **characterized by** any one of the slave nodes (41,44,45,46) being arranged to send the tick after a reset of the respective slave node.

13. A network as claimed in claim 11 or 12, **characterized in that** the slave nodes (41,44,45,46) have different requirements for time accuracy, and that each slave node or one of a group of slave nodes sends a tick to the time synchronization master node (40) when needed.

14. A network as claimed in any one of claims 11-13, **characterized in that** one slave node (41) is a time submaster node-which synchronizes itself with the master node, and that at least one further slave (42,43) node is synchronized with the time submaster node (41).

15. A time synchronization slave node for network having a time synchronization arrangement in which in one node in the network is a time synchronization master node (40) and the remaining nodes are time synchronization slave nodes (41,44,45,46) synchronized with the master node (40), **characterized in that**
the slave node (41,44,45,46) is arranged to receive a synchronization 20 tick from the network,
the slave node (41,44,45,46) is arranged to record the local tick arrival time,
the slave node (41,44,45,46) is arranged to receive from the synchronization master node (40) a message containing the tick arrival time of the tick at said synchronization master node (40), and
the slave node (41,44,45,46) is arranged to compare the tick arrival time, contained in the message, with the recorded local tick arrival time and to update a local clock by the difference between the local tick arrival time and the tick arrival time at the master node (40) .

16. A synchronization slave node as claimed in claim 15, **characterized in that** the slave node (41,44,45,46) is arranged to send a synchronization tick on the network at regular intervals or on demand.

17. A synchronization slave node as claimed in claim 15 or 16, **characterized in that** the slave node (41) is a time submaster node which synchronizes itself with the synchronization master node (40), and that at least one further slave node (42,43) is synchronized with the time submaster node (41).

## Patentansprüche

1. Verfahren zur Bereitstellung von Zeitsynchronisierung in einem Netz, das Netzknoten (40, 41, 44, 45, 46) enthält, wobei das Verfahren aufweist:
- Definieren eines der Knoten als Zeitsynchronisierungs-Hauptknoten (40);
- Definieren anderer der Knoten als Zeitsynchronisierungs-Nebenknoten (41, 44, 45, 46),
**gekennzeichnet durch**
- Senden eines Synchronisierungs-Tick (Uhrsignal) im Netz von mindestens einem der Zeitsynchronisierungs-Nebenknoten (41, 44, 45, 46) in regelmäßigen Intervallen oder auf Anforderung;
- Empfangen des Tick an allen Knoten (40, 41, 44, 45, 46);
- Aufzeichnen der lokalen Tick-Ankunftszeit an mindestens jedem der eine Zeitsynchronisierung erfordernden Zeitsynchronisierungs-Nebenknoten (41, 44, 45, 46);
- bei der Detektion eines solchen Tick Senden einer Meldung vom Zeitsynchronisierungs-Hauptknoten (40), die die Tick-Ankunftszeit am Zeitsynchronisierungs-Hauptknoten enthält, an jeden der eine Zeitsynchronisierung erfordernden Zeitsynchronisierungs-Nebenknoten (41, 44, 45, 46);
- an mindesten jedem der eine Zeitsynchronisierung erfordernden Zeitsynchronisierungs-Nebenknoten (41, 44, 45, 46) Empfangen der Meldung, die die Tick-Ankunftszeit am Zeitsynchronisierungs-Hauptknoten (40)enthält;
- an mindesten jedem der eine Zeitsynchronisierung erfordernden Zeitsynchronisierungs-Nebenknoten (41, 44, 45, 46) Vergleichen der in der Meldung enthaltenen Tick-Ankunftszeit mit der aufgezeichneten lokalen Tick-Ankunftszeit am entsprechenden Nebenknoten und Aktualisieren einer lokalen Uhr mit der Differenz zwischen der lokalen Tick-Ankunftszeit und der Tick-Ankunftszeit am Hauptknoten (40).

2. Verfahren nach Anspruch 1, **dadurch gekennzeichnet, dass** der Tick in dem Moment definiert wird, wenn das letzte Bit einer bestimmten Menge Netzwerkadressen detektiert wird, oder wenn eine vorgeschriebene Bitfolge in einem Paket detektiert wird, oder wenn ein vorgeschriebenes Signal auf dem lokalen Netzmedium (Local Area Network; LAN) detektiert wird.

3. Verfahren nach Anspruch 1 oder 2, **dadurch gekennzeichnet, dass** ein lokaler Knoten (41, 44, 45, 46) so eingerichtet ist, dass er einen Rohdatenstrom vom lokalen Netz LAN über eine geeignete Schnittstelle empfängt.

4. Verfahren nach einem der vorigen Ansprüche, **dadurch gekennzeichnet, dass** der lokale Knoten (41, 44, 45, 46) so eingerichtet ist, dass er mit einem Synchronisierungs-Zeitdetektor zum Detektieren eines Tick im Rohdatenstrom, der von der Netzwerkschnittstelle empfangen wird, kommuniziert.

5. Verfahren nach einem der vorigen Ansprüche, **dadurch gekennzeichnet, dass** der lokale Knoten so eingerichtet ist, dass er die Zeit zwischen Synchronisierungsmeldungen erfasst.

6. Verfahren nach einem der vorigen Ansprüche, **dadurch gekennzeichnet, dass** jeder LAN-Knoten so eingerichtet ist, dass er eine Zeitverteilungsmeldung plus die Zeitspanne, die seit Ankunft des Tick vergangen ist, empfängt.

7. Verfahren nach einem der vorigen Ansprüche, **dadurch gekennzeichnet, dass** einer der Nebenknoten (41, 44, 45, 46) so eingerichtet ist, dass er den Tick nach einem Rücksetzen des entsprechenden Nebenknotens sendet.

8. Verfahren nach einem der vorigen Ansprüche, **dadurch gekennzeichnet, dass** die Nebenknoten (41, 44, 45, 46) unterschiedliche Anforderungen hinsichtlich der zeitlichen Genauigkeit haben, wobei jeder Nebenknoten oder einer aus einer Gruppe Nebenknoten einen Tick an den Zeitsynchronisierungs-Hauptknoten (40) sendet, wenn erforderlich.

9. Verfahren nach einem der vorigen Ansprüche, **dadurch gekennzeichnet, dass** ein Nebenknoten (41) ein Zeit-Unterhauptknoten ist, der sich selbst mit dem Hauptknoten synchronisiert, und dass mindestens ein weiterer Nebenknoten (42, 43) mit dem Zeit-Unterhauptknoten (41) synchronisiert ist.

10. Verfahren nach einem der vorigen Ansprüche, **dadurch gekennzeichnet, dass** der Synchronisierungs-Tick ein vorgegebenes Netzwerkereignis ist.

11. Netzwerk mit einer Zeitsynchronisierungsanordnung, bei der ein Knoten des Netzwerks ein Zeitsynchronisierungs-Hauptknoten (40) ist, während die übrigen Knoten (41, 44, 45, 46) Zeitsynchronisierungs-Nebenknoten sind, die mit dem Hauptknoten (40) synchronisiert sind, **dadurch gekennzeichnet, dass** mindestens ein Nebenknoten (41, 44,45, 46) im Netz so eingerichtet ist, dass einer einen Synchronisierungs-Tick im Netz in regelmäßigen Intervallen oder auf Anforderung sendet;
der Zeitsynchronisierungs-Hauptknoten (40) so eingerichtet ist, dass er bei der Detektion eines solchen Tick von dem mindestens einen Nebenknoten (41, 44, 45, 46) eine Meldung an jeden der eine Zeitsynchronisierung erfordernden Zeitsynchronisierungs-Nebenknoten (41, 44, 45, 46) sendet, die die Tick-Ankunftszeit am Zeitsynchronisierungs-Hauptknoten (40) enthält;
jeder der eine Zeitsynchronisierung erfordernden Nebenknoten (41, 44, 45, 46) so eingerichtet ist, dass er den Tick und die Meldung empfängt und die Tck-Ankunftszeit in der Meldung mit der eigenen gespeicherten Tick-Ankunftszeit der Meldung des Nebenknotens (41, 44, 45, 46) vergleicht und die lokale Uhr des Nebenknotens (41, 44, 45, 46) mit der Differenz zwischen der lokalen Ankunftszeit und der Ankunftszeit am Hauptknoten (40) aktualisiert.

12. Netzwerk nach Anspruch 11, **dadurch gekennzeichnet, dass** jeder der Nebenknoten (41, 44, 45, 46) so eingerichtet ist, dass er den Tick nach einem Rücksetzen des entsprechenden Nebenknotens sendet.

13. Netzwerk nach Anspruch 11 oder 12, **dadurch gekennzeichnet, dass** die Nebenknoten (41, 44, 45, 46) unterschiedliche Anforderungen hinsichtlich der zeitlichen Genauigkeit haben, und dass jeder Nebenknoten oder einer aus einer Gruppe Nebenknoten einen Tick an den Zeitsynchronisierungs-Hauptknoten (40) sendet, wenn erforderlich.

14. Netzwerk nach einem der Ansprüche 11 bis 13, **dadurch gekennzeichnet, dass** ein Nebenknoten (41) ein Zeit-Unterhauptknoten ist, der sich selbst mit dem Hauptknoten synchronisiert, und dass mindestens ein weiterer Nebenknoten (42,43) mit dem Zeit-Unterhauptknoten (41) synchronisiert ist.

15. Zeitsynchronisierungs-Nebenknoten für ein Netz mit einer Zeitsynchronisierungsanordnung, bei der ein Knoten im Netz ein Zeitsynchronisierungs-Hauptknoten (40) ist und die übrigen Knoten Zeitsynchronisierungs-Nebenknoten (41, 44, 45, 46) sind, die mit dem Hauptknoten (40) synchronisiert sind,
**dadurch gekennzeichnet, dass**
der Nebenknoten (41, 44, 45, 46) so eingerichtet ist, dass er einen Synchronisierungs-Tick vom Netz empfängt;
der Nebenknoten (41, 44, 45, 46) so eingerichtet ist, dass er die lokale Tick-Ankunftszeit aufzeichnet;
der Nebenknoten (41, 44, 45, 46) so eingerichtet ist, dass er vom Synchronisierungs-Hauptknoten (40) eine Meldung empfängt, die die Tick-Ankunftszeit des Tick am Synchronisierungs-Hauptknoten (40) enthält; und
der Nebenknoten (41, 44, 45, 46) so eingerichtet ist, dass er die in der Meldung enthaltene Tick-Ankunftszeit mit der aufgezeichneten lokalen Tick-Ankunftszeit vergleicht und eine lokale Uhr mit der Differenz zwischen der lokalen Tick-Ankunftszeit und der Tick-Ankunftszeit am Hauptknoten (40) aktualisiert.

16. Synchronisierungs-Nebenknoten nach Anspruch 15, **dadurch gekennzeichnet, dass** der Nebenknoten (41, 44, 45, 46) so eingerichtet ist, dass er einen Synchronisierungs-Tick im Netz in regelmäßigen Intervallen oder auf Anforderung sendet.

17. Synchronisierungs-Nebenknoten nach Anspruch 15 oder 16, **dadurch gekennzeichnet, dass** der Nebenknoten (41) ein Zeit-Unterhauptknoten ist, der sich selbst mit dem Synchronisierungs-Hauptknoten (40) synchronisiert, und dass mindestens ein weiterer Nebenknoten (42, 43) mit dem Zeit-Unterhauptknoten (41) synchronisiert ist.

## Revendications

1. Procédé permettant d'obtenir une synchronisation dans un réseau comprenant des noeuds de réseau (40, 41, 44, 45, 46), ledit procédé comprenant les étapes consistant à
- définir un desdits noeuds comme étant un noeud maître de synchronisation (40),
- définir d'autres desdits noeuds comme étant des noeuds esclaves de synchronisation (41, 44, 45, 46),
**caractérisé par** les étapes consistant à
- envoyer un train d'impulsions de synchronisation sur le réseau à partir d'au moins un desdits noeuds esclaves de synchronisation (41, 44, 45, 46) à intervalles réguliers ou à la demande,
- recevoir le train d'impulsions de tous lesdits noeuds (40, 41, 44, 45, 46),
- enregistrer l'heure d'arrivée locale du train d'impulsions, au moins à chacun dudit noeud esclave de synchronisation (41. 44. 45. 46) exigeant la synchronisation,
- envoyer un message contenant l'heure d'arrivée du train d'impulsions audit noeud maître de synchronisation, à n'importe lequel desdits noeuds esclaves de synchronisation (41, 44, 45, 46) exigeant la synchronisation, à partir dudit noeud maître de synchronisation (40), dès la détection d'un tel train d'impulsions,
- recevoir ledit message contenant l'heure d'arrivée de train d'impulsions audit noeud maître de synchronisation (40), au moins à chacun dudit noeud esclave de synchronisation (41, 44, 45, 46) exigeant la synchronisation,
- comparer l'heure d'arrivée du train d'impulsions contenu dans le message comprenant l'heure d'arrivée locale enregistrée du train d'impulsions du noeud esclave respectif et mettre à jour une horloge locale par la différence entre le moment d'arrivée local du train d'impulsions et le moment d'arrivée du train d'impulsions au noeud principal (40), au moins à chacun dudit noeud esclave de synchronisation (41. 44. 45. 46) exigeant la synchronisation.

2. Procédé selon la revendication 1, **caractérisé en ce que** ledit train d'impulsions est défini au moment pour lequel le dernier bit d'un ensemble particulier d'adresses de réseau est détecté ou lorsqu'une séquence spécifiée de bit dans un paquet est détectée ou lorsqu'un signal spécifié est détecté sur le support du réseau de zone locale LAN.

3. Procédé selon la revendication 1 ou 2, **caractérisé en ce qu'**un noeud local (41, 44, 45, 46) est adapté pour recevoir un flux de données brutes à partir dudit réseau de zone locale LAN de zone locale au travers d'une interface appropriée.

4. Procédé selon l'une quelconque des revendications précédentes, **caractérisé en ce que** ledit noeud local (41, 44, 45, 46) est adapté pour communiquer avec un détecteur de synchronisation afin de détecter un train d'impulsions dans le flux de données brutes reçu de l'interface réseau.

5. Procédé selon l'une quelconque des revendications précédentes, **caractérisé en ce que** ledit noeud local est adapté pour conserver le temps entre les messages de synchronisation.

6. Procédé selon l'une quelconque des revendications précédentes, **caractérisé en ce que** n'importe quel noeud est adapté pour recevoir un message de répartition de temps en plus du temps qui s'est écoulé depuis l'arrivée du train d'impulsions.

7. Procédé selon l'une quelconque des revendications précédentes, **caractérisé en ce que** tous les noeuds esclaves (41, 44, 45, 46) sont prévus pour envoyer le train d'impulsions après un redémarrage du noeud esclave respectif.

8. Procédé selon l'une quelconque des revendications précédentes, **caractérisé en ce que** les noeuds esclaves (41, 44, 45, 46) ont différentes spécifications de besoin pour ce qui concerne la précision du temps, chaque noeud esclave ou un parmi un groupe de noeuds esclaves envoie un train d'impulsions au noeud maître de synchronisation (40) quand cela est nécessaire.

9. Procédé selon l'une quelconque des revendications précédentes, **caractérisé en ce qu'**un noeud esclave (41) est un noeud secondaire de temps qui se synchronise lui-même avec le noeud principal, et qu'au moins un autre noeud esclave (42, 43) est synchronisé avec le noeud secondaire de temps (41).

10. Procédé selon l'une quelconque des revendications précédentes, **caractérisé en ce que** le train d'impulsions de synchronisation est un événement prédéterminé de réseau.

11. Réseau comprenant un dispositif de synchronisation dans lequel un noeud du réseau est un noeud maître de synchronisation (40), les noeuds restants étant des noeuds esclaves de synchronisation (41, 44, 45, 46) synchronisés avec le noeud principal (40), **caractérisé en ce que**
au moins un noeud esclave (41, 44, 45, 46) dans le réseau est prévu pour envoyer un train d'impulsions de synchronisation sur le réseau à intervalles réguliers ou à la demande,
le noeud maître de synchronisation (40) étant prévu pour envoyer un message contenant l'heure d'arrivée du train d'impulsions au noeud principal (40) à n'importe quel noeud (41, 44, 45, 46) exigeant la synchronisation, dès la détection d'un tel train d'impulsions en provenance dudit au moins un noeud esclave (41, 44, 45, 46),
n'importe quel noeud esclave (41, 44, 45, 46) exigeant la synchronisation est prévu pour recevoir le train d'impulsions et le message, et pour vérifier l'heure d'arrivée du train d'impulsions du message par rapport au propre temps d'arrivée stocké du train d'impulsions du noeud esclave (41, 44, 45, 46) et mettre à jour l'horloge locale du noeud esclave (41, 44, 45, 46) par différence entre le moment d'arrivée local et le moment d'arrivée au noeud principal (40).

12. Réseau selon la revendication 11, **caractérisé en ce que** tous les noeuds esclaves (41, 44, 45, 46) sont prévus pour envoyer le train d'impulsions après un redémarrage du noeud esclave respectif.

13. Réseau selon la revendication 11 ou 12, **caractérisé en ce que** les noeuds esclaves (41, 44, 45, 46) comprennent différentes spécifications de besoin pour la précision de temps, et que chaque noeud esclave ou un noeud choisi parmi un groupe de noeuds esclaves envoie un train d'impulsions au noeud maître de synchronisation (40) quand cela est nécessaire.

14. Réseau selon l'une quelconque des revendications 11 à 13, **caractérisé en ce qu'**un noeud esclave (41) est un noeud secondaire qui se synchronise lui-même avec le noeud principal, et qu'au moins un autre noeud esclave (42, 43) est synchronisé avec le noeud secondaire (41).

15. Noeud esclave de synchronisation prévu pour un réseau ayant un dispositif de synchronisation dans lequel un noeud du réseau est un noeud maître de synchronisation (40) et les noeuds restants sont des noeuds d'esclave de synchronisation (41, 44, 45, 46) synchronisés avec le noeud principal (40),
**caractérisé en ce que**
le noeud esclave (41, 44, 45, 46) est prévu pour recevoir un train d'impulsions de synchronisation du réseau,
le noeud esclave (41, 44, 45, 46) est prévu pour enregistrer l'heure d'arrivée locale du train d'impulsions,
le noeud esclave (41, 44, 45, 46) est prévu pour recevoir du noeud maître de synchronisation (40) un message contenant l'heure d'arrivée du train d'impulsions audit noeud maître de synchronisation (40), et
le noeud esclave (41, 44, 45, 46) est prévu pour comparer l'heure d'arrivée du train d'impulsions, contenu dans le message, avec le temps d'arrivée local enregistré du train d'impulsions et pour mettre à jour une horloge locale par différence entre le moment d'arrivée local du train d'impulsions et le moment d'arrivée du train d'impulsions au noeud principal (40).

16. Noeud esclave de synchronisation selon la revendication 15, **caractérisé en ce que** le noeud esclave (41, 44, 45, 46) est prévu pour envoyer un train d'impulsions de synchronisation sur le réseau à intervalles réguliers ou à la demande.

17. Noeud esclave de synchronisation selon la revendication 15 ou 16, **caractérisé en ce que** le noeud esclave (41) est un noeud secondaire de temps qui se synchronise lui-même avec le noeud maître de synchronisation (40), et qu'au moins un autre noeud esclave (42, 43) est synchronisé avec le noeud secondaire de temps (41).
